(19) Europäisches Patentamt / European Patent Office / Office européen des brevets

(11) **EP 3 740 702 B1**

(12) **EUROPEAN PATENT SPECIFICATION**

(45) Date of publication and mention
of the grant of the patent:
**21.08.2024 Bulletin 2024/34**

(21) Application number: **19705567.6**

(22) Date of filing: **18.01.2019**

(51) International Patent Classification (IPC):
***F16H 57/01*** *(2012.01)*

(52) Cooperative Patent Classification (CPC):
**F16H 57/01; F16H 63/3416; F16H 63/3425;**
F16H 2057/012; F16H 2057/016

(86) International application number:
**PCT/IB2019/050430**

(87) International publication number:
**WO 2019/142140 (25.07.2019 Gazette 2019/30)**

(54) **METHOD FOR DETERMINING THE TOOTH DEFORMATION, PREFERABLY FOR THE STATIC TRANSMISSION ERROR OF GEARS**

VERFAHREN ZUR BESTIMMUNG DER ZAHNVERFORMUNG, VORZUGSWEISE FÜR DEN STATISCHEN GETRIEBEFEHLER VON ZAHNRÄDERN

PROCÉDÉ DE DÉTERMINATION DE LA DÉFORMATION DE DENTS, DE PRÉFÉRENCE POUR L'ERREUR DE TRANSMISSION STATIQUE D'ENGRENAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2018 IT 201800001328**

(43) Date of publication of application:
**25.11.2020 Bulletin 2020/48**

(73) Proprietor: **Politecnico Di Torino**
**10129 Torino (IT)**

(72) Inventors:
• **ROSSO, Carlo**
**10129 Torino (IT)**

• **BRUZZONE, Fabio**
**10129 Torino (IT)**
• **MAGGI, Tommaso**
**10129 Torino (IT)**
• **MARCELLINI, Claudio**
**10129 Torino (IT)**

(74) Representative: **Mola, Edoardo**
**Praxi Intellectual Property S.p.A.**
**Corso Vittorio Emanuele II, 3**
**10125 Torino (IT)**

(56) References cited:
**US-A- 6 080 199      US-A1- 2016 098 499**

**Description**

**TECHNICAL FIELD**

The present invention refers to a method to determine the deformation of meshing teeth, preferably to determine the static transmission error in gearboxes, including at least two gear wheels.

**STATE OF THE ART**

The meshing teeth of two gear wheels under load are deformed and this causes meshing errors negatively impacting on quietness and/or vibrations of the gearbox. The determination of tooth deformation provides information about the stiffness of the gearbox under load, helping the dynamic analysis of the gearbox.

A further application of the determination of the deformation is the calculation of the static transmission error (STE) is defined as the difference between the real angular position due to load and the ideal one related to the same gears with infinite stiffness and theoretical profiles, for instance involute form, without geometrical errors such as production tolerances.

A high static transmission error has a negative impact on the useful life of a gearbox since it could lead to an elevated wear, therefore requiring harsh maintenance as in the case of wind parks in mountainous or marine areas, or to noise, vibrations and overloads in aerospace and automotive applications.

In loaded gears, the elastically deformed teeth affect the real operating conditions compared to the theoretical ones. For this purpose, some geometrical corrections to the ideal or standard tooth flank profile are applied during the design phase, by adding or removing material starting from the theoretical profile, e.g. involute form, in order to compensate the deformations due to load.

The STE can be computed through more or less complex formulas, with the introduction of some simplifications, for example by applying them to standard profiles with no modifications and/or considering the load operating on the theoretical line of contacts even if the meshing teeth are deformed. This allows a rapid but extremely approximate computation of the STE and therefore the project usually requires a long and expensive test phase, in the case of complex and critical gearboxes used in the aerospace and the marine fields.

Furthermore it is commonly known that the static transmission error could be calculated through the finite element analysis (FEM) of the gears, as for example shown in US-A1-6080199 and US-A1-2016098499. Although this process is reasonably accurate and enables to implement possible profile corrections, it is extremely costly from a computational point of view and therefore it slows down the design phase. In particular, the computational effort is due to the fact that the system of solving equations of the mathematical model is applied to each element both on the surface and in the bulk of the tooth and therefore the number of unknowns is relatively high. Furthermore, US-A1-6080199 identifies the contact point based on the corrections applied to the profile and on the number of meshing teeth but does not identify the displacement of the contact point along the tooth radial profile based on the deformation under load for each angular position of the meshing teeth. In particular, an iterative cycle is identified to establish the load split when at least two pairs of teeth mesh.

US-A1-2016098499 discloses a dynamic analysis of meshing teeth and, again, does not discuss iterative cycles to calculate, for a given angular position, the actual contact point resulting after the deformation of the loaded teeth.

**OBJECTS AND BRIEF DESCRIPTION OF THE INVENTION**

The object of the present invention is to determine the deformation of meshing teeth, preferably to calculate the STE in a reasonably accurate way and faster than a FEM analysis also in cases where the tooth profile is not standard.

The object of the present invention is achieved by a method according to claim 1.

In particular, it was verified that the point of contact, in which the transmitted force is concentrated, moves away from the line of contact due to the tooth deformation. This requires, for each angular position of the engaging teeth, an iterative process to identify the position of the point of contact as a result of the deformation. In fact, for each load position, the relative deformation has to be re-calculated until the convergence because it depends directly on the load position.

Preferably, for each iteration, the new point of contact position which corresponds to the transmitted load application point has to be calculated applying a relative rotation of the meshing tooth profiles, in this way it is loyal as much as possible to the real engaging conditions.

For the same purpose, it is preferable to apply an angular constraint to the driven gear and a rotation to the pinion.

Based on the above, an additional aspect of the present invention is to focus on the kinematics of the gears and, therefore, of determining the STE on the basis of rotations and angles and, only if it is subsequently necessary, to calculate the relative impacts along favourite directions, for example along the direction of the line of contacts.

Furthermore, through the analysis of the STE of the gearbox, it is possible to adjust the tooth profiles and manufacture gear wheels so as to minimize the STE and/or reduce peak values of STE.

Further advantages of this invention are in the dependent claims and in the description.

## BRIEF DESCRIPTION OF THE FIGURES

The invention description in the following paragraphs is based on non-limitative examples. They are set out for explanatory purpose in the attached drawings. These drawings are respectively related to:

- Fig.1: a scheme that represents the iterative application of the load to an elastically deformable profile for the implementation to deformable tooth profile for load transmission.
- Fig. 2: a flowchart that explain the iterative method in accordance with the present invention to calculate the point of contact between deformed teeth under load in the current invention.
- Fig. 3: a representation of one phase of the method in accordance with the current invention.
- Fig. 4: a scheme to show at least two pairs of meshing teeth.
- Fig. 5: distribution load coefficient graph when there are two pairs of engaging teeth.

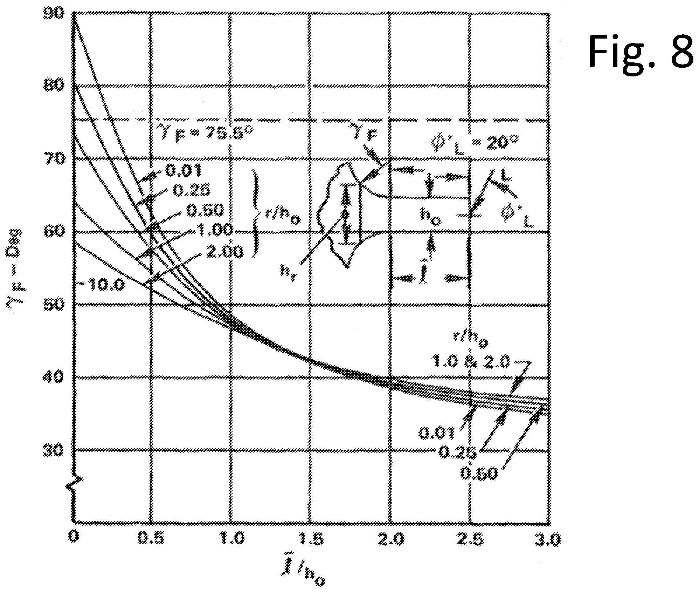

- Fig. 6, 7, 8, 9: support schemes for the elastic deformation models of tooth under load.

## DETAILED DESCRIPTION OF THE INVENTION

A calculation method of the STE is proposed: this methodology is based on the application of a mathematical model for the computation of the engaging teeth elastic deformations and on an iterative determination of the contact equilibrium zone, e.g. a point or a region between the meshing teeth on a section plane containing the theoretical concentrated load exchanged between the meshing teeth. This plane is orthogonal to the rotational axis in the case of spur gears. Thus, the load exchanged from a conducting gear to a driven one is applied in the contact zone. In particular, the mathematical model for computing the under load deformations of the meshing teeth depends on the load position along the flank and, given through the present invention's method that this position changes due to the deformations under load and especially moves from the theoretical line of contacts, for each new position of the load on the profiles there is a consequent modification of the profiles' deformation. It is therefore necessary, for each angular position of a reference pair of teeth along the line of contacts, to iteratively identify the contact zone where the final load is applied as a result of the deformation of the teeth due to the load.

In particular, the deformation of each tooth depends on the position of the load application, since every position of the load corresponds to a different stiffness of the tooth.

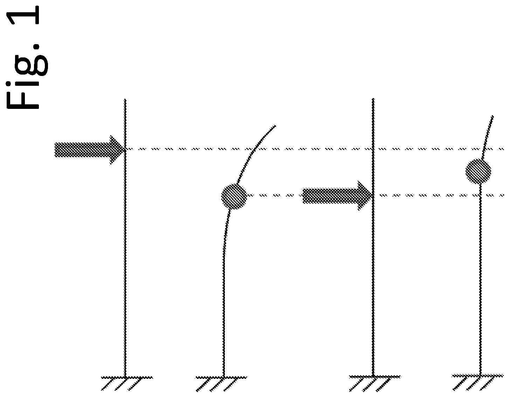

An example for the iterative approach to identify the final position of the load on the deformed profiles of the engaging teeth is shown in figure 1, where a concentrated force is represented by an arrow and the contact point by the circle. Consequently to the application of the load to the ideal and rigid configuration (scheme on the top of the figure) a new point of contact is obtained. After the load is applied to the new point of contact on the non-deformed profile, a subsequent point of contact is detected and so forth during the iterative process until convergence or an appropriate condition that conducts to the final zone of the load application, different from the starting one, i.e. first iteration, where the load operates.

Furthermore, this iterative process is implemented for every angular position related to the conducting gear and the driven gear, from the angular position where two teeth engage for the first time until the position where the same teeth recess at the end of the engagement. This results to the fact that the load changes its application zone on the relative flank profile of the tooth following, as a first approximation, the intersection between the profiles themselves and the line of the theoretical contacts. The calculation of the tooth stiffness depends on the position of the load application on the profile, as will be explained below. Thus, the STE is computed for each angular position of the gears corresponding to two meshing teeth.

According to a main implementation form of the present invention, the profile of the teeth are discretized through a plurality of nodes associated to a respective biunique identification code.

According to a sequent implementation form, the load is concentrated on one of the nodes and can be considered as punctiform.

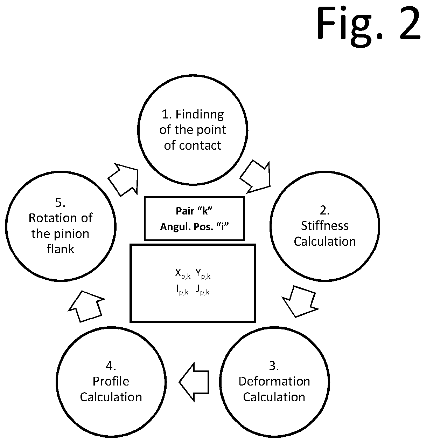

For simplicity, figure 2 shows the iterative cycle for an angular position of the gears whose two teeth, respectively owned by the driven and the driver, are in contact and the number of teeth couplings is 1.

At the beginning, the load is applied in the theoretical position, e.g. on the intersection node between the line of contacts and the non-deformed profiles along the line of contacts itself. The load is applied on each of the two meshing teeth and for each of them the stiffness is calculated taking account of some parameters related to the material of the teeth, e.g. Young's modulus and Poisson coefficient, and to the geometrical characteristics of the tooth, e.g. the inertia moment of the section.

Furthermore starting from the stiffnesses, the gears' deformations are computed and, for the driven gear, the deformations agree with the rotational direction of the teeth whereas for the driver gear the deformations are in opposition to this direction of the teeth.

These deformations are then respectively applied to the non-deformed profiles of each tooth that are spaced, after the application of the deformation.

In order to obtain the new point of contact, a law of motion is performed on the tooth of the driver gear to make the tooth itself touch the driven gear's one.

Preferably, a rigid constraint is imposed to the driven's tooth and a rotation around the rotational axis to the driver's tooth.

According to a preferred implementation form, once the new contact zone is identified, the load is associated to the biunique identification code of a relative discretization node and, at the beginning of the following iteration, the load will be applied to the non-deformed profile at the node identified by the biunique idendication code.

It is also possible that each flank is described by a plurality of portion of mathematical curves characterized by a corresponding analytical equation. In this case, it is possible to proceed with the iterations and to identify the exact position where to apply the contact by using the indipendent variable of the mathematical equations describing the profiles. Moreover it is possible to use the differential equations related to the distributed loads, and not concentrated, in order to increase the accuracy of the calculation.

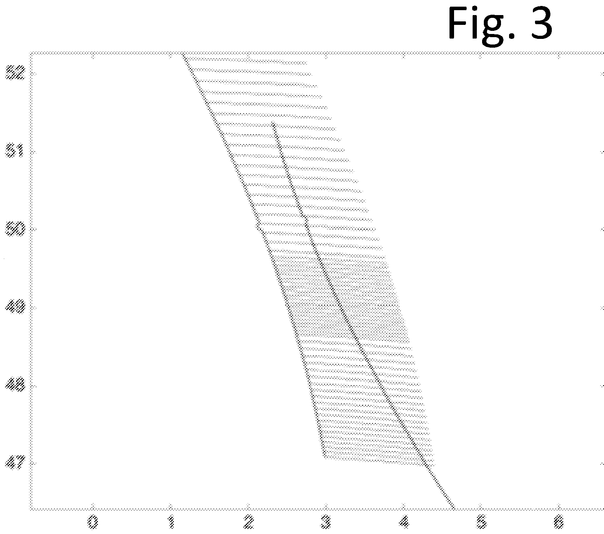

According to the preferred implementation form of figure 3, the law of motion applied to the driven gear (profile on the left in figure) is a rotation around the same gear's axis. This rotation, applied to the nodes of the discretization of the deformed profile, generates trajectories or paths in the form of arc of circle that intersect the deformed profile of the driven gear.

The new point of contact and the related node both on the driver flank and driven flank is better found by the minimum trajectory between all those drawn from the deformed tooth profile of the driver and the driven's one.

It has been verified that after some iterations the new point of contact converges inside a zone on the deformed profiles that has an amplitude comparable with the Hertzian contact area; this does not have a significant impact on the accuracy of the STE prediction. In particular, it has been verified that the load, if it is concentrated, distances itself from the theoretical line of contacts because of the deformations, if it is distributed, it has an asymmetrical distribution with respect to the theoretical line of contacts.

It is also important to consider the case where there is a number of mating teeth higher than 1.

It means that for at least a stretch of the line of contact, there are two couples of mating teeth. It impacts on the STE that, qualitatively, decreases when there are two couples of mating teeth due to the greater total stiffness, whereas it increases abruptly when there is the release of an engagment, because all the load is concentrated only to the other couple.

When a second couple of mating teeth comes into contact, it is important to determine how the transmitted load is shared or allocated between the two. This is established by the stiffness, calculated depending on the load point of application for each condition of transmission, which means for a number of meshing teeth included between 1 and 2:

- Single contact: one pair of meshing teeth 1 is in contact;
- Contemporary contact between pair 0 and 1;
- Contemporary contact between pair 1 and 2.

In the cases of two pairs of meshing teeth, it is necessary to establish a load sharing or allocation factor, in particulatr a non-linear load sharing factor. It applies for each pair of meshing teeth a coefficient to the transmitted load. Considering the compliance 'y' as the mutual of the stiffness 'k', it means y=1/k, for each angular position, the stiffness and compliance calculation in the first point of contact of non deformed profiles is made considering an unitary contact force.

In this fictitious condition of load the percentages of load sharing or allocation are calculated between the two contemporary tooth pairs. So the load sharing factor is only based on geometric and material characteristic without considering the additional subdivision of the load due to deformations.

However it is possible to procede, for each angular position, with following iterations in order to divide the load considering the stiffness calculated when the final deformation is reached. In this way, at the end of each iteration, the allocation coefficients are recalculated, as well as the new load position. These coefficients are described by way of example based on relative deformed profile compliances. In general, in case of two pairs of meshing teeth, the majority of the load will be applied to the pair of teeth with a greater overall stiffness and a lower compliance, on the contrary the lower part of load will be applied to the pair with a lower overall stiffness and a greater compliance. Consequently, the load which acts on each pair of teeth is the ratio between the compliance of the other pair and the sum of both the compliances.

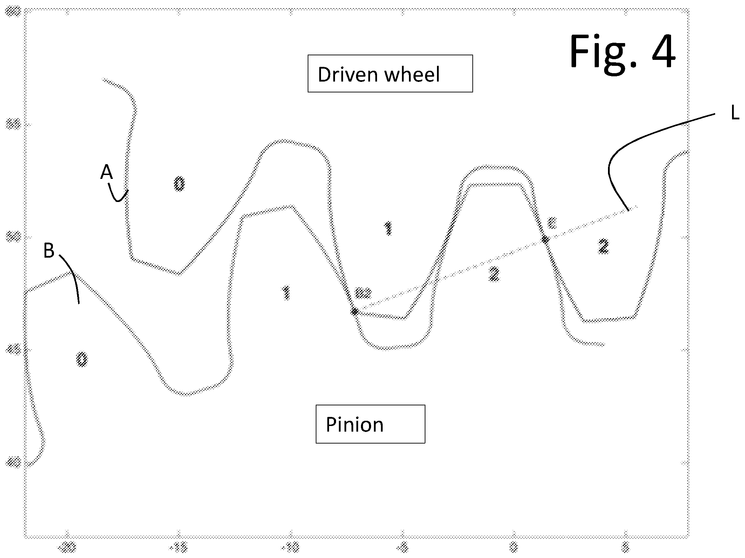

When the contemporary meshing teeth are included between 2 and 1, occurs the following cases (figure 4 - non-deformed tooth profiles) referring to gear wheels A, B, point of contact E and theoretical line of contacts L:

Contact between tooth pairs 1 and 2:

- 

$$C_1 = \frac{y_{tot,P}{}_{unit,accoppiamento\ 2}}{y_{tot,P}{}_{unit,accoppiamento\ 1} + y_{tot,P}{}_{unit,accoppiamento\ 2}}$$

- 

$$C_2 = \frac{y_{tot,P}{}_{unit,accoppiamento\ 1}}{y_{tot,P}{}_{unit,accoppiamento\ 1} + y_{tot,P}{}_{unit,accoppiamento\ 2}}$$

Contact between tooth pairs 0 and 1:

- 

$$C_1 = \frac{y_{tot,P}{}_{unit,accoppiamento\ 0}}{y_{tot,P}{}_{unit,accoppiamento\ 1} + y_{tot,P}{}_{unit,accoppiamento\ 0}}$$

- 

$$C_0 = \frac{y_{tot,P}{}_{unit,accoppiamento\ 1}}{y_{tot,P}{}_{unit,accoppiamento\ 1} + y_{tot,P}{}_{unit,accoppiamento\ 0}}$$

Contact of a single pair:

- 

$$C_1 = 1$$

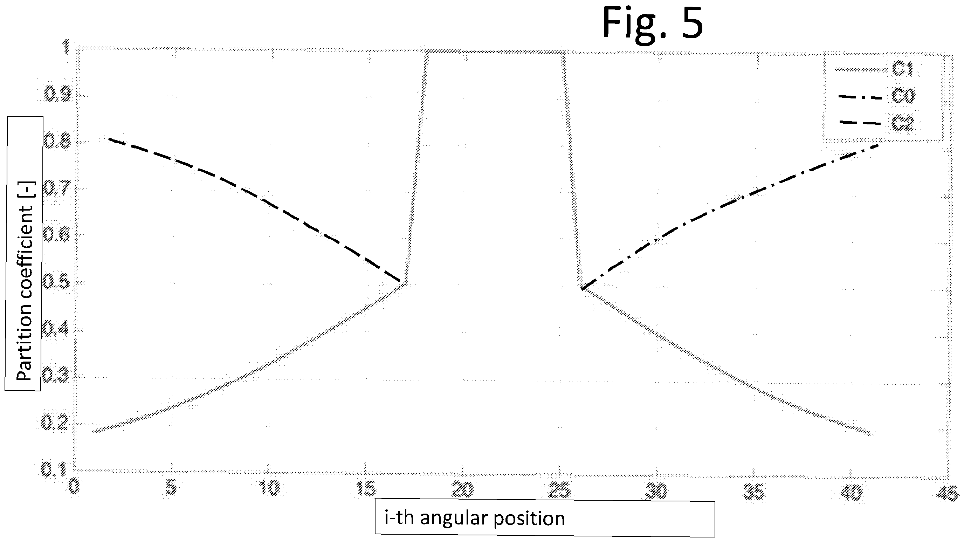

The figure 5 shows the three coefficients (solid line, dashed line and dash-dotted line), always included between 0 and 1 and the sum of which is always equal to 1. Through such allocation load coefficients between the pairs of meshing teeth, the mathematical model for the STE calculation is not linear. Using this methodology it is also possible to consider a number of meshing teeth greater than 2.

Preferably, the meshing tooth deformations are calculated superimposing mathematical models such as beams that express the tooth behaviour during the bending end / or shear end / or due to contact pressure, of the tooth base and tooth fillet under load and of the tooth body.

In particular, some mathematical models of the elastic deformation are applied in each iteration in order to find the final point of contact, that is not on the line of contact, and others are applied just once for each angular position using the results of the iterative cycle.

Preferably, the bending and shear deformation, rather than integral formulation, is calculated trough:

$$y_B = \frac{L\cos^2\phi_i'}{E} \cdot \sum_{i=1}^{n} \delta_i \cdot \left\{ \frac{l_i^2 - l_i\delta_i + \frac{1}{3}\delta_i^2}{\bar{I}_i} + \frac{2.4(1+v) + \tan^2\phi_i'}{\bar{A}_i} \right\}$$

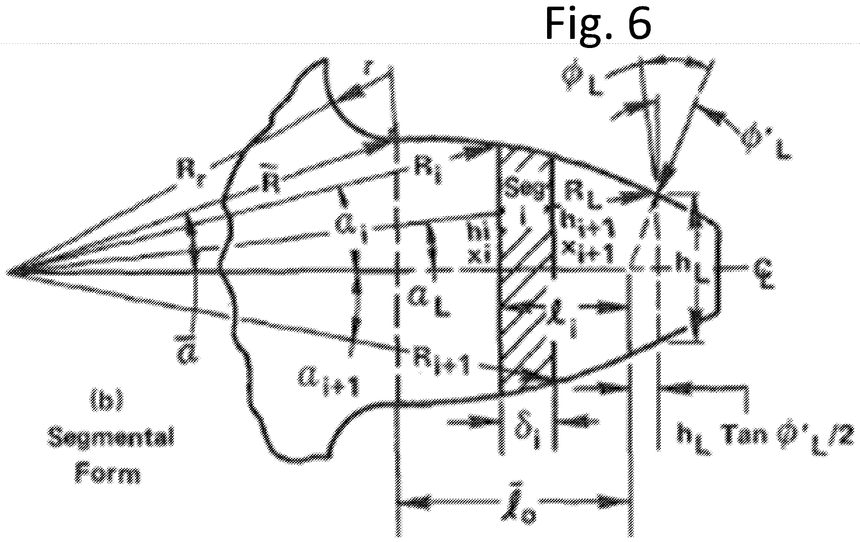

and the relative quantities are shown in figure 6. For each pair of discretiation nodes, it is possible to identify a relative tooth layer with thickness $\delta_i$, moment of inertia $\overline{I}_i$ and area $\overline{A}_i$. Furthermore, E is the Young modulus [ N/(mm^2) ] and v the Poisson coefficient [-] of the gears.

For the unloaded nodes located over the contact zone, the formulation to apply is related to a rigid rotation, for example:

$$\alpha_{rigido} = \tan^{-1}\left(\frac{y_B \cdot \cos \phi'_i}{\overline{l}}\right)$$

Where $y_B$ is only concerned to the point of contact.

Preferably, the base and fillet deformation is calculated by:

$$y_F = \frac{L \cos^2 \phi'_i}{WE} \cdot (1 - v^2) \cdot \left\{\frac{16.67}{\pi}\left(\frac{l_F}{h_F}\right)^2 + 2\left(\frac{1 - v - 2v^2}{1 - v^2}\right)\left(\frac{l_F}{h_F}\right) + 1.534\left(1 + \frac{\tan^2 \phi'_i}{2.4(1 + v)}\right)\right\}$$

with

$$l_F = \overline{l} + r \cdot (\sin \gamma_F - \sin \overline{\gamma})$$

$$h_F = \overline{h} + 2r \cdot (\cos \overline{\gamma} - \cos \gamma_F)$$

Where $\gamma$ is the polar coordinate of the fillet and $\gamma_F$ is the angular position where the deformation under load has the maximum value.

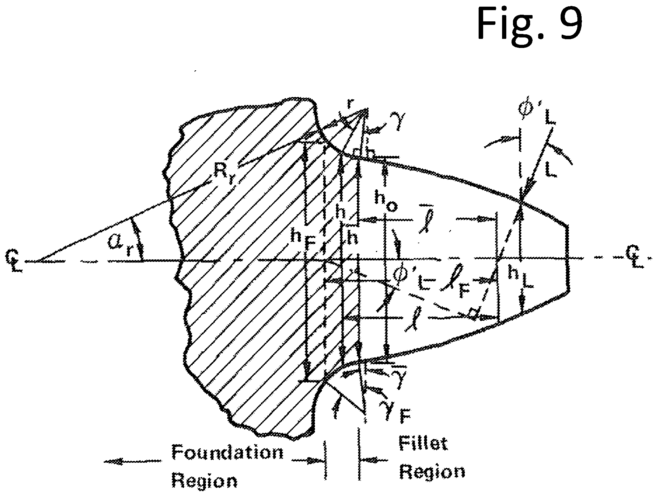

$L_F, h_F$ are respectively the loading arm and the transversal position where the load is applied in function of the tooth centreline, they derive from $\overline{h}, \overline{l}$ that are quantities shown in figure 9, $\overline{l}$ changes along the engagement.

Furthermore, refering to the figures:

$\phi_{L_i}$ is defined as $\cos \phi_{L_i} = \dfrac{R_B}{R_{L_i}}$

$$\phi'_{L_i} = \phi_{L_i} - \alpha_{L_i}$$

Alternatively, the deformation is provided by:

$$y_F = \frac{L \cos^2 \phi'_i}{WE} \cdot \left\{L\left(\frac{l_F}{h_F}\right)^2 + M\left(\frac{l_F}{h_F}\right) + P(1 + Q \tan^2 \phi'_i)\right\}$$

And L, M, P and Q depend on tooth geometry and, for example, the respective values are either constant: L=5.2 or 5.306; M=1 or 1.4 (plane stress) or 1.14 (plane deformation); P=1.4 or 1.534; Q=0.294 or 0.32; or result from analytically obtained formulae and directly refer to tooth geometry to link the latter to the result of the calculation.

Preferably, the deformation due to the contact pressure is based on the hertzian theory:

$$y_L = y_R + y_C \approx \frac{2L}{\pi b} \left\{ \left( \frac{1 - v_1{}^2}{E_1} \right) \cdot \left[ \ln \frac{2h_{Hertz1}}{w} - \left( \frac{v_1}{2(1 - v_1)} \right) \right] + \left( \frac{1 - v_2{}^2}{E_2} \right) \cdot \right.$$
$$\left. \cdot \left[ \ln \frac{2h_{Hertz2}}{w} - \left( \frac{v_2}{2(1 - v_2)} \right) \right] \right\}$$

where $w$ is the elliptical contact area half-axis having equation:

$$w = \sqrt{\frac{4L}{\pi b} \left[ \left( \frac{1 - v_1{}^2}{E_1} \right) + \left( \frac{1 - v_2{}^2}{E_2} \right) \right] / \left[ \frac{1}{R_{osc_1}} + \frac{1}{R_{osc_2}} \right]}$$

where $R_{osc_i}$ is the radius of the osculating circle that describes the curvature of the tooth flank in the hertzian theory: $R_{osc_i} = R_{L_i} \sin \phi_{L_i}$;

Alternatively, it is possible to apply a non-Hertzian contact model via an iterative algorithm calculating the pressure distribution and the relative peak within the local contact area between contacting teeth. In particular, for each discretization point 'i' of the tooth profile, the load is expressed by:

$$p_i = \frac{E^* \cdot h_i}{2b}$$

where

$$\frac{1}{E^*} = \frac{1 - u_1^2}{E_1} + \frac{1 - v_2^2}{E_2}$$

whrein pedices '1' and '2' refer to the respective toothed wheels; 'b' is the half-contact ength; and $h_i$ is a displacement, e.g. a deformation in the direction perpendicular to the contact force that is calculated, in a first iteration, starting from a

$$P = \sum_{i=1}^{N} \frac{E^* \cdot h_i}{2b} \cdot l_i$$

tentative value. Furthermore, for each iteration, it is calculated how many 'i' points belong to the contact area and, afterwards, the overall load is expressed by:

wherein '$1_i$' is the distance between to adjacent 'i' nodes. Overall load P is also expressed as a function of applied torque C:

$$P^* = \frac{C}{r_i}$$

wherein '$r_i$' is the istantaneous radius of the contact point. The iterative process continues until the difference between the two loads is below a predefined threshold or until the elastic deformation reaction within the contact area does not equal the external force.

$$\frac{|P^* - P|}{P^*} < \varepsilon$$

As it is noticeable from the formulas the above deformation models depend on the contact point position or can be applied to the contact point modifying its position and therefore they have to be calculated for each iteration of the point of contact calculation cycle spaced from the line of contact.

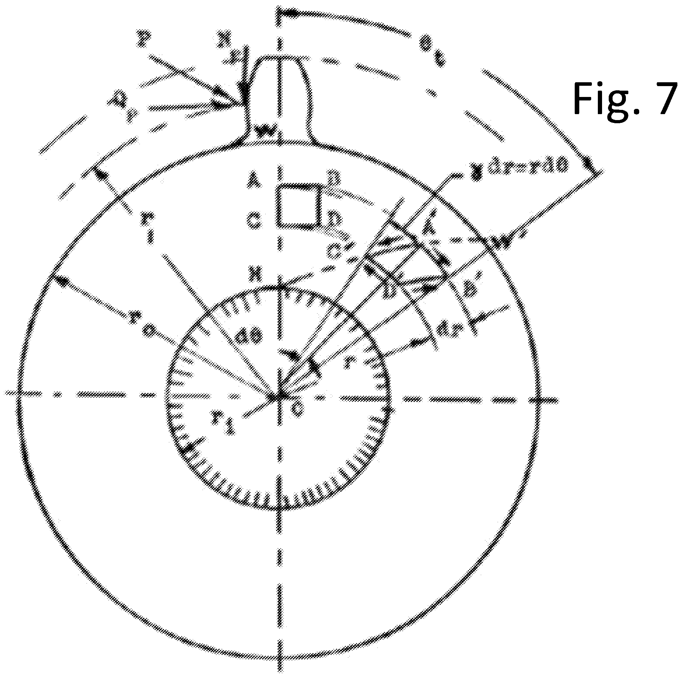

Furthermore there are other deformation models that could be calculated at the end of the iterative cycle, as the following that is referred to the body deformation of the gear wheel (figure 7):

$$y_{Attia,P} = \frac{Q_p \cdot R_L{}^2}{2\pi bE} \cdot \left[ \frac{1}{r_i{}^2} - \frac{z^2}{r_p{}^2(z - 1,25)} \right]$$

where $r_P$ represents the pitch radius and $b$ the facewidth of the gear.

The models non restrictively described in the previous paragraphs could be integrated or substituted by other models and could be also partially selected by the computer software user that implement the calculation method of the current invention.

Furthermore, the present invention may be realized through a computer program comprsing at least a processor and a memory and/or fugrther coding devices for executing one or more steps of the method, when the program is executed by a computer. Therefore, the scope of protection includes such computer program and memory supports readable by computers, such supports comprising coding elements of programs to execute one or more steps of the method when the program is executed by the computer.

## Claims

1. A method for determining, via a processor coupled to a memory, a deformation of loaded teeth (1, 2), preferably to determine a static transmission error (STE), between a first and a second gear wheel (A, B) having respective geometries identifying a theoretical line of contacts (L) referred to undeformed teeth, comprising the step of calculating, for each predefined angular meshing positon between the first and the second gear wheel, a loaded position of the point of contact (E) where the load is concentrated or is the largest, such position being spaced from the line of contacts because of the deformation of meshing teeth, the calculation including an iterative cycle applied to an analytical mathematical model based on analytical formulae expressing the elastic deformation of respective meshing tooth profiles based on the position and the inclination of the concentrated load in said contact point between meshing tooth profiles, geometrical parameters of the meshing teeth and on the elastic modulus of each material of the first and the second gear wheel, wherein after the load is applied on the undeformed profile a subsequent point of contact is detected, then the load is applied to the subsequent point of contact on the undeformed profile until convergence of an appropriate condition that conducts to the final point of the load application form the first iteration, such that the position of said point of contact moving along the meshing tooth profiles between a base and a fillet of a meshing tooth because of the deformation of the meshing teeth during the iterative cycle.

2. The method according to claim 1, wherein the law of motion is a rotation of the driving gear wheel about its own axis.

3. The method according to any of the preceding claims, wherein, where there are at least two couples of meshing teeth, a load allocation coefficient among meshing teeth is calculated for each iteration for each couple of meshing teeth after the identification of a new point of contact where the load is the largest.

4. The method according to any of the preceding claims, wherein the meshing tooth profiles are discretized and, for each iteration, the new point of contact of the deformed profiles where the load is the largest is associated to a first biunique identification code of a first discretization node of the tooth profile of the driven gear wheel and a second biunique identification code is associated to a second discretization node of the tooth profile of the driven gear wheel, and wherein, in the subsequent iteration, the load is applied to the non-deformed tooth profile in the respective discretization nodes identified by the first and second identification code.

**5.** The method according to any of the preceding claims, wherein the mathematical model comprises the sum by superimposition effect of a flexural and/or shear deformation contribution, of a pressure contact deformation contribution and of a deformation contribution deriving from the deformation of a web of the gear wheel.

**6.** The method according to any one of the preceding claims, in which the mathematical model includes a contribution for the non-Hertzian calculation of the contact pressure through an iterative cycle in which, for each iteration, a first form of the load applied on a contact surface it is expressed through a first mathematical formula based on elastic deformation in the contact surface along the direction perpendicular to the profile of the meshing tooth and a second form of the applied load is expressed through a second mathematical formula based on the torque transmitted between the first and second wheel toothed, where the iterative cycle stops when the difference between the load calculated by the first formula and the load calculated by the second formula falls below a predetermined threshold.

**7.** A method for determining the tooth profile of a first and a second gear wheel, comprising the step of determining a static transmission error by the steps according to any of the preceding claims.

**8.** A method for manufacturing a tooth profile of a first and a second gear wheel, comprising the step of determining a static transmission error by the steps according to any of claims 1 to 6.

**9.** Computer program comprising program code means configured to provide the execution of each steps of any of claims 1 to 8 when said program is executed on a computer.

**Patentansprüche**

**1.** Verfahren zur Bestimmung einer Verformung belasteter Zähne (1, 2) mittels eines mit einem Speicher gekoppelten Prozessors, vorzugsweise zur Bestimmung eines statischen Übertragungsfehlers (STE), zwischen einem ersten und einem zweiten Zahnrad (A, B) jeweils mit Geometrien, die eine theoretische Kontaktlinie (L) in Bezug auf unverformte Zähne identifizieren, umfassend den Schritt des Berechnens, für jede vordefinierte Winkeleingriffsposition zwischen dem ersten und dem zweiten Zahnrad, einer belasteten Position des Kontaktpunkts (E), wo die Last konzentriert oder am größten ist, wobei diese Position von der Kontaktlinie aufgrund der Verformung der Eingriffszähne durch einen iterativen Zyklus beabstandet ist, der auf ein analytisches mathematisches Modell angewendet wird, das auf analytischen Formeln basiert, die die elastische Verformung der jeweiligen Eingriffszahnprofile als Funktion von ausdrücken Position und Neigung der im Kontaktpunkt zwischen den in Eingriff befindlichen Zahnprofilen konzentrierten Last und den geometrischen Parametern der in Eingriff stehenden Zähne und auf dem Elastizitätsmodul jedes Materials des ersten und zweiten Zahnrads, in dem nach dem Aufbringen der Last auf das unverformte Profil wurde ein aufeinanderfolgender Kontaktpunkt erkannt, und daher wurde die Last auf den Kontaktpunkt nacheinander auf das unverformte Profil ausgeübt, bis der Punkt erreicht wurde, an dem die Konvergenz einer geeigneten Bedingung, die zum Endpunkt der Anwendung der Last führt, die erste Iteration bildet, so dass die Position des Kontaktpunkts verschiebt sich entlang der Profile der kämmenden Zähne zwischen einer Basis und einem Kopf eines Eingriffszahns aufgrund der Verformung der kämmenden Zähne während des iterativen Zyklus.

**2.** Verfahren nach Anspruch 1, wobei das Bewegungsgesetz eine Drehung des Antriebszahnrades um seine eigene Achse ist.

**3.** Verfahren nach einem der vorhergehenden Ansprüche, wobei, wenn mindestens zwei Zahnpaare im Eingriff sind, ein Lastverteilungskoeffizient zwischen den kämmenden Zähnen für jede Iteration für jedes Zahnpaar im Eingriff berechnet wird, nachdem ein neuer Kontaktpunkt identifiziert wurde, an dem die Last am größten ist.

**4.** Verfahren nach einem der vorhergehenden Ansprüche, wobei die Profile des im Eingriff befindlichen Zahns diskretisiert werden und bei jeder Iteration der neue Kontaktpunkt der verformten Profile, an dem die Last am größten ist, einem ersten bi-eindeutigen Identifikationscode eines ersten Knotens zum Diskretisieren des Zahnprofils des angetriebenen Zahnrads zugeordnet ist und ein zweiter bi-eindeutiger Identifikationscode einem zweiten Knoten zum Diskretisieren des Profils des Zahns des angetriebenen Zahnrads zugeordnet ist, und wobei, bei der nächsten Iteration wird die Last auf das unverformte Profil des Zahns in den jeweiligen Diskretisierungsknoten angewendet, die durch den ersten und den zweiten Identifikationscode identifiziert werden.

**5.** Verfahren nach einem der vorhergehenden Ansprüche, wobei das mathematische Modell die Summe durch Überlagerungseffekt eines Verformungsbeitrags bei Biegung und/oder Scherung, eines Verformungsbeitrags durch Druckkontakt und eines daraus resultierenden Verformungsbeitrags umfasst, die aus der Verformung eines Kerns des Transmission, abgeleitet wird.

6. Verfahren nach einem der vorhergehenden Ansprüche, wobei das mathematische Modell einen Beitrag zur nicht-Hertzschen Berechnung des Anpressdrucks durch einen iterativen Zyklus umfasst, in dem für jede Iteration eine erste Form der auf der Kontaktfläche ausgeübten Last wird durch eine erste mathematische Formel ausgedrückt wird, die auf der elastischen Verformung der Kontaktfläche in der Richtung senkrecht zum Profil des in Eingriff befindlichen Zahns basiert, und wobei eine zweite Form der aufgebrachten Last wird durch eine zweite mathematische Formel ausgedrückt, die auf dem zwischen ihnen übertragenen Drehmoment des ersten und des zweiten Zahnrads basiert, wobei der iterative Zyklus angehalten wird, wenn die Differenz zwischen der durch die erste Formel berechneten Last und der durch die zweite Formel berechneten Last unter einen vorgegebenen Schwellenwert fällt.

7. Verfahren zum Bestimmen des Profils der Zähne eines ersten und eines zweiten Zahnrads, umfassend den Schritt des Bestimmens eines statischen Übertragungsfehlers durch die Schritte nach einem der vorhergehenden Ansprüche.

8. Verfahren zur Herstellung eines Profils der Zähne eines ersten und eines zweiten Zahnrads, umfassend den Schritt der Bestimmung eines statischen Übertragungsfehlers durch die Schritte nach einem der Ansprüche 1 bis 6.

9. Computerprogramm, das Programmcodemittel umfasst, die so konfiguriert sind, dass sie die Ausführung jedes der Schritte nach einem der Ansprüche 1 bis 8 sicherstellen, wenn das Programm auf einem Computer ausgeführt wird.

**Revendications**

1. Procédé pour déterminer, à l'aide d'un processeur couplé à une mémoire, une déformation de dents chargées (1, 2), de préférence pour déterminer une erreur de transmission statique (STE), entre une première et une deuxième roue dentée (A, B) ayant respectivement des géométries identifiant une ligne théorique de contacts (L) référée à des dents non déformées, comprenant l'étape de calculer, pour chaque position d'engrènement angulaire prédéfinie entre la première et la deuxième roue dentée, une position chargée du point de contact (E) où la charge est concentrée ou est la plus grande, cette position étant espacée de la ligne de contacts en raison de la déformation des dents en prise par un cycle itératif appliqué à un modèle mathématique analytique basé sur des formules analytiques exprimant la déformation élastique des profils de dents en prise respectifs en fonction de la position et l'inclinaison de la charge concentrée dans ledit point de contact entre des profils de dents en prise, des paramètres géométriques des dents en prise et sur le module élastique de chaque matériau de la première et de la deuxième roue dentée, dans lequel après l'application de la charge sur le profil non déformé, un point de contact successif à été détecté, donc la charge a été appliquée au point de contact successif sur le profil non déformé jusqu'au point où la convergence d'une condition appropriée qui porte au point final de l'application de la charge forme la première itération, donc la position dudit point de contact se déplace le long des profils du dent de l'engrenage entre une base et une tête d'une dent de l'engrenage du fait de la déformation des dents en prise au cours du cycle itératif.

2. Procédé selon la revendication 1, dans lequel la loi du mouvement est une rotation de la roue dentée d'entrainement autour de son propre axe.

3. Procédé selon l'une quelconque des revendications précédentes, dans lequel, lorsqu'il y a au moins deux paires de dents en prise, un coefficient de répartition de charge parmi les dents en prise est calculé pour chaque itération pour chaque paire de dents en prise après l'identification d'un nouveau point de contact, où la charge est la plus grande.

4. Procédé selon l'une quelconque des revendications précédentes, dans lequel les profils du dent en prise sont discrétisés et, à chaque itération, le nouveau point de contact des profils déformés où la charge est la plus grande est associé à un premier code d'identification bi-unique d'une première noeud de discrétisation du profil du dent de la roue dentée entraînée et un deuxième code d'identification bi-unique est associé à un deuxième noeud de discrétisation du profil du dent de la roue dentée entraînée, et dans lequel, dans l'itération suivante, la charge est appliquée sur le profil non déformé du dent dans les noeuds de discrétisation respectifs identifiés par le premier et le deuxième code d'identification.

**5.** Procédé selon l'une quelconque des revendications précédentes, dans lequel le modèle mathématique comprend la somme par effet de superposition d'une contribution de déformation en flexion et/ou cisaillement, d'une contribution de déformation par contact à pression et d'une contribution de déformation dérivant de la déformation d'une âme du roue dentée.

**6.** Procédé selon l'une quelconque des revendications précédentes, dans lequel le modèle mathématique comprend une contribution au calcul non hertzien de la pression de contact à travers un cycle itératif dans lequel, pour chaque itération, une première forme de la charge appliquée sur une surface de contact est exprimée par une première formule mathématique basée sur la déformation élastique de la surface de contact dans la direction perpendiculaire au profil de la dent en prise et une deuxième forme de la charge appliquée est exprimée par une deuxième formule mathématique basée sur le couple transmis entre la première et la deuxième roues dentées, où le cycle itératif s'arrête lorsque la différence entre la charge calculée par la première formule et la charge calculée par la deuxième formule tombe en dessous d'un seuil prédéterminé.

**7.** Procédé pour déterminer le profil des dents d'une première et d'une deuxième roue dentée, comprenant l'étape consistant à déterminer une erreur de transmission statique par les étapes selon l'une quelconque des revendications précédentes.

**8.** Procédé de fabrication d'un profil des dents d'une première et d'une deuxième roue dentée, comprenant l'étape consistant à déterminer une erreur de transmission statique par les étapes selon l'une quelconque des revendications 1 à 6.

**9.** Programme informatique comprenant des moyens de code de programme configurés pour assurer l'exécution de chacune des étapes de l'une quelconque des revendications 1 à 8 lorsque ledit programme est exécuté sur un ordinateur.

Fig. 1

Fig. 2

Fig. 3

Fig. 4

# Fig. 5

Fig. 6

(b) Segmental Form

Fig. 7

Fig. 8

EP 3 740 702 B1

# Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6080199 A1

- US 2016098499 A1